# EUROPEAN PATENT APPLICATION

(11) **EP 1 246 490 A1**
(43) Date of publication of application: **02.10.2002**
(21) Application number: 01440090.7
(22) Date of filing: 28.03.2001
(51) Int. Cl.: H04Q 7/38

(54) **A method of selecting one base station, a mobile phone and a base station**

(71) Applicant: Evolium S.A.S., 78141 Velizy Cedex (FR)
(72) Inventor: Bordeaut, Stanislas, 75015 Paris (FR); Drevon, Nicolas, 75016 Paris (FR)
(74) Representative: Brose, Gerhard, Dipl.-Ing.

(57) **Abstract**

The invention relates to a method of selecting one base station out of the number of all base stations receivable by a mobile station being in position to possibly select such base station, when not all said base stations are operated by one and the same operator including the steps of
- assigning base station identification codes to the base stations in such a way that at each location a prescribed part of each of said base station identification codes is uniquely identifying exactly one operator,
- notifying an identifier of the home operator of said mobile station to one of said base stations,
- forwarding a list of the base station identification codes of all receivable base stations to said mobile station by said one of said base stations,
- forwarding a list including for each of the possible values of said prescribed part of said base station identification codes a ranking factor to said mobile station by said one of said base stations, and
- filtering the receivable base stations according to said ranking factor and monitoring the emissions of the filtered out base stations.

The invention further relates to a mobile phone and a base station.

## Description

### Technical Field of the Invention

The invention relates to a method of selecting one base station out of the number of all base stations receivable by a mobile station being in position to possibly select such base station, when not all said base stations are operated by one and the same operator, a mobile phone and a base station.

### Discussion of Related Art

In the new regulatory and commercial situation with both GSM and UMTS networks, it will be necessary for a mobile station, in the following called MS, to treat selected PLMNs with different PLMN codes as equivalent to each other at PLMN selection, handover, cell re-selection, etc. PLMN here means Public Land Mobile Network and is the sum of all parts of a network of a certain operator. Such PLMN especially includes a number of base stations. Such base station, in the following called a BS, is intended to offer communication's connections to a multiple of mobile stations. As there is not only one operator but a number of operators most locations belong to more than one such PLMN and, consequently, normally more than one BS is offering communication's connections to the MSs in its area.

Each (owner of an) MS has a contract with (at least) one of said operators, his home operator with his Home Public Land Mobile Network HPLMN. When leaving this HPLMN, an MS can only have communication's connections via BSs of other PLMNs. Such leaving an HPLMN is called roaming. One possibility to nevertheless have communication's connections is to have contracts with other operators too and being able to select another PLMN as the actual HPLMN. The operators provide another possibility, which is considered here. Each operator may have contracts with other operators to accept the clients of the other operator like or similar to an own client. Normally this is done mutually.

Each BS distributes lists of all BSs receivable by an MS in its area. It is known to include the PLMNs of the BSs in such list. A PLMN consists of three bytes. Additionally each MS contacting a BS is notifying an identifier of the home operator of said MS to said BS.

If an MS trying to contact a BS subsequently monitors the BSs until finding one which by contracts is foreseen to be contacted, this will take too much time.

### Summery of the Invention

According to the invention the problems are overcome by a method of selecting one base station out of the number of all base stations receivable by a mobile station being in position to possibly select such base station, when not all said base stations are operated by one and the same operator including the steps of
- assigning base station identification codes to the base stations in such a way that at each location a prescribed part of each of said base station identification codes is uniquely identifying exactly one operator,
- notifying an identifier of the home operator of said mobile station to one of said base stations,
- forwarding a list of the base station identification codes of all receivable base stations to said mobile station by said one of said base stations,
- forwarding a list including for each of the possible values of said prescribed part of said base station identification codes a ranking factor to said mobile station by said one of said base stations, and
- filtering the receivable base stations according to said ranking factor and monitoring the emissions of the filtered out base stations.

According to the invention the problems are further overcome by a mobile phone, commonly called a mobile station MS, able to select one base station out of the number of all base stations receivable by said mobile station, with notifying means for notifying an identifier of the home operator of said mobile station to one of said base stations and receiving means for receiving a list of base station identification codes of all receivable base stations from said one of said base stations, said mobile station further including receiving means for receiving a list including for each of the possible values of said prescribed part of said base station identification codes a ranking factor and evaluation means for filtering the receivable base stations according to said ranking factor taking into account that said prescribed part of each of said base station identification codes is uniquely identifying exactly one operator and monitoring the emissions of the filtered out base stations.

According to the invention the problems are further overcome by a base station able to offer communication's connections to a multiple of mobile stations with receiving means for receiving an identifier of a home operator of one of said mobile stations and transmitting means for transmitting a list of base station identification codes of all base stations receivable by said one of said mobile stations, said base station further including transmitting means for transmitting a list including for each of the possible values of said prescribed part of said base station identification codes a ranking factor taking into account that said prescribed part of each of said base station identification codes is uniquely identifying exactly one operator.

The basic idea behind this invention is that it is always possible to identify the BSs so that the "Network Country Code NCC", which is part of the "Base Station Identification Code BSIC" of the BS is uniquely identifying exactly one operator at each location. Then it is only necessary to transfer a list with Yes-or-No-messages (one bit each) for all possible NCCs.

When identifying the BSs so that a longer part of the "Base Station Identification Code BSIC" is used to uniquely identifying exactly one operator at each location than the number of operators (and PLMNs) at each location is not restricted to eight.

Instead of Yes-or-No-messages with one bit each of coarse it is possible to use ranking factors with more than two possible values, thus giving more freedom in the choice of the BS to be contacted.

In both latter cases the list including for each of the possible values of said prescribed part of said base station identification codes a ranking factor of coarse is longer than one single byte but anyway it is a relatively short list.

Other embodiments of the invention are described in the subclaims and in the following description.

### Detailed Description of Preferred Embodiments

The terms used and the messages cited in the following explanatory description are taken from the well-known GSM technique which is one possible technique where the invention could be used.

For background information reference is made to "'3GPP GERAN TS 04.60.RLC/MAC protocol, version 8.7.0, November 2000", and "'3GPP GERAN TS 05.08: Radio Subsystem Link Control, version 8.7.0, November 2000".

Currently each BS is identified by a Base Station Identification Code BSIC with a 3-bit part Network Country Code NCC.

A prerequisite of this example of the subject invention is to configure the NCC values such that in a given Routing Area and in a given Location Area each NCC shall represent a unique PLMN. This is to be done by the operators and than the respective values are to be introduced by O&M measures.

Currently BSs are broadcasting information of a general character in the form of so-called BCCHs or PBCCHs. This information is foreseen for an MS up to now not in contact with any BS or trying to change to another BS during standby or for handover purposes during an existing connection.

One currently foreseen possibility is to include a list of all reachable PLMNs into such BCCHs or PBCCHs. The invention however suggests including a list of BSICs including the NCCs chosen in the above-described manner. Such list could be part of the System Information SI2 in case of BCCHs or of the Packet System Information PSI3 or PSI5 in case of PBCCHs.

An MS seeking to get contact with a BS anyway has to reveal its home operator by denominating his PLMN which is said MSs HPLMN.

In addition each MS has a list of all PLMNs with which his home operator has contracts and whom he may contact. Other contacts are allowed too, but it is preferred to contact only under contractual conditions. In principle it is possible that the operators have contracts with different contents, in which case not only yes-or-no-situations should be dealt with but also ranking situations with more than two possibilities.

Not only the MSs have such lists containing the contractual situation between the operators but also the BSs have. With such lists and knowing the home operator and his HPLMN of an MS seeking to get a contact any BS is able to filter out those PLMNs and, according to the invention, the respective NCCs which the MS preferably should contact.

As the number of all possible PLMNs or NCCs is very limited (in this example: 8) it is not necessary to forward a 2-column table with the numbers of the NCCs in one column and the matching yes-or-no-value or other ranking in the other column. It is rather sufficient to order the first column in ascending order without leaving out any values and then only forward the second column containing the "ranking". In the foreseen example with a 1-bit-ranking this "list" is a mere bitmap. Examples of the messages that could carry such "list" are the Packet Measurement Order, the Measurement Information, the System Information SI or the Packet System Information PSI sent on main DCCH or on PACCH, the Location Area Update accept or the Routing Area Update accept, in the both latter cases the NCC-Equivalent "list" being piggy backed.

In using the list of BSICs and the list of rankings the MS is able to filter out those BSs, the NCC part of the BSIC of which is marked accordingly.

With knowing the BSs to be contacted preferably it needs only few measuring and other effort to quickly find out a BS offering all necessary characteristics to be the one to be chosen.

## Claims

1. A method of selecting one base station out of the number of all base stations receivable by a mobile station being in position to possibly select such base station, when not all said base stations are operated by one and the same operator, **characterized by** the steps of
- assigning base station identification codes to the base stations in such a way that at each location a prescribed part of each of said base station identification codes is uniquely identifying exactly one operator,
- notifying an identifier of the home operator of said mobile station to one of said base stations,
- forwarding a list of the base station identification codes of all receivable base stations to said mobile station by said one of said base stations,
- forwarding a list including for each of the possible values of said prescribed part of said base station identification codes a ranking factor to said mobile station by said one of said base stations, and
- filtering the receivable base stations according to said ranking factor and monitoring the emissions of the filtered out base stations.

2. A method as described in claim 1 **characterized in that** said prescribed part of each of said base station identification codes is a 3-bit network country code of said base station.

3. A method as described in claim 1 **characterized in that** said ranking factor is a 1-bit yes-or-no-message.

4. A method as described in claims 2 and 3 **characterized in that** said list including for each of the possible values of said prescribed part of said base station identification codes a ranking factor is a single (8-bit-) byte.

5. A mobile phone, commonly called a mobile station MS, able to select one base station out of the number of all base stations receivable by said mobile station, with notifying means for notifying an identifier of the home operator of said mobile station to one of said base stations and receiving means for receiving a list of base station identification codes of all receivable base stations from said one of said base stations, **characterized in that** said mobile station further includes receiving means for receiving a list including for each of the possible values of said prescribed part of said base station identification codes a ranking factor and evaluation means for filtering the receivable base stations according to said ranking factor taking into account that said prescribed part of each of said base station identification codes is uniquely identifying exactly one operator and monitoring the emissions of the filtered out base stations.

6. A base station able to offer communication's connections to a multiple of mobile stations with receiving means for receiving an identifier of a home operator of one of said mobile stations and transmitting means for transmitting a list of all base stations receivable by said one of said mobile stations, **characterized in that** said list of all base stations is a list of all base station identification codes, that said base station further includes transmitting means for transmitting a list including for each of the possible values of said prescribed part of said base station identification codes a ranking factor taking into account that said prescribed part of each of said base station identification codes is uniquely identifying exactly one operator.
